# EUROPEAN PATENT APPLICATION

(11) **EP 2 693 084 A1**
(43) Date of publication of application: **05.02.2014**
(21) Application number: 12765293.1
(22) Date of filing: 29.03.2012
(51) Int. Cl.: F16H 63/34, B60T 1/06

(54) **TRANSMISSION**

(30) Priority: 29.03.2011 JP 2011071946
(71) Applicant: Aisin AI Co., Ltd., Nishio-shi, Aichi 445-0006 (JP)
(72) Inventor: FUKAYA Masaru, Nishio-shi Aichi 445-0006 (JP); KAWAMOTO Masaki, Nishio-shi Aichi 445-0006 (JP); OGAMI Shiro, Nishio-shi Aichi 445-0006 (JP); KAYUKAWA Norio, Nishio-shi Aichi 445-0006 (JP); KATO Hiroyuki, Nishio-shi Aichi 445-0006 (JP)
(74) Representative: Kuhnen & Wacker
(86) International application number: PCT/JP2012/058315
(87) International publication number: WO 2012/133621

(57) **Abstract**

It is an object of this invention to provide a transmission which can improve the installability of the transmission to the vehicle by reducing the size of the transmission as a whole as well as by reducing the number of components and reducing the manufacturing cost. The transmission includes a case, a rotation shaft rotatably supported on the case, a speed change gear rotatably supported on the rotation shaft, fork shaft movable in an axial direction in response to the shift operation, a connecting member for changing over a connection condition of the speed change gear between a connected condition with the rotation shaft and a disconnected condition from the rotation shaft in response to an axial position of the fork shaft, a parking gear fixed to the rotation shaft, a detent member movable between a detent position where the rotation of the parking gear is restricted and a detent released position where the rotation of the parking gear is allowed and a cam member for moving the detent member to the detent position or to the detent released position in response to the axial position of the fork shaft.

## Description

### TECHNICAL FIELD

This invention relates to a transmission provided with a parking mechanism which keeps a vehicle to be in a stopped condition.

### BACKGROUND OF THE TECHNOLOGY

A transmission is used as a device which changes the speed of rotation outputted from a power source, such as for example, an engine installed in a vehicle. Further, according to a Patent Document 1, a parking device is disclosed, which keeps a vehicle to be in a stopped condition during the vehicle being stopped. This parking device restricts the rotation of a parking gear fixed to an output shaft of the transmission by engaging a detent portion of a parking pawl with the parking gear. According to this type of transmission device, due to the necessity of providing a link mechanism which operates the parking pawl in the transmission case, the device may become oversized.

Another Patent Document 2 discloses a parking mechanism which operates the parking pawl by a shift device which changes the speed stage of the transmission. According to this parking mechanism, a predetermined speed change stage is established by the shift device which changes the speed change gears by selectively driving a plurality of shift rails and a parking rod which operates the parking pawl is provided in parallel with the plurality of shift rails thereby to drive the parking rod by the shift device. This type of device can utilize an existing shift device and accordingly a simple structure and an effective space saving can be achieved.

### DOCUMENT LIST OF STATE OF ART

### PATENT DOCUMENT

Patent Document 1: JP11(1999)-1158A
Patent Document 2: JP2010-7754 A

### DISCLOSURE OF INVENTION

### PROBLEMS TO BE SOLVED

However, according to the parking mechanism disclosed in the above Patent Document 2, it is necessary to supplement additional components, such as a sensor for detecting the position of the parking rod, or a connecting member for connecting the parking rod with a select mechanism for the shift device in addition to the parking rod. Accordingly, the select mechanism for the shift device becomes complicated and further it is necessary to oversize the transmission due to the arrangement of the above additional members. The transmission also is required to be downsized and the reduction of number of the components in terms of installability to the vehicle. The present invention was made in consideration with the above problems and the object of the invention is to provide a transmission which can reduce the number of components and to reduce the manufacturing cost and at the same time to improve the installability to the vehicle by downsizing.

### MEANS FOR SOLVING THE PROBLEM

(1) The transmission associated with the invention is characterized in that the transmission comprises a case, a rotation shaft rotatably supported on the case, a speed change gear rotatably supported on the rotation shaft, a fork shaft provided to be movable in an axial direction relative to the rotation shaft and movable in an axial direction in response to a shift operation, a connecting member provided to be movable in an axial direction in cooperation with the movement of the fork shaft for changing over a connection condition of the speed change gear between a connected condition with the rotation shaft and a disconnected condition from the rotation shaft in response to an axial position of the fork shaft, a parking gear fixed to the rotation shaft, a detent member provided at the case to be engageable with the parking gear and movable between a detent position where the rotation of the parking gear is restricted and a detent released position where the rotation of the parking gear is allowed and a cam member provided on the fork shaft for moving the detent member to the detent position or to the detent released position in response to the axial position of the fork shaft.

It is noted here that the transmission is used to perform a speed change operation by moving the fork shaft in an axial direction. For example, when the fork shaft is moved to a predetermined axial position, the connection condition of the connecting member which is movable in cooperation with the movement of the fork shaft is changed over from the disconnected condition to the connected condition. Thus the transmission establishes a transmittable speed change stage by changing the speed of the rotation driving force of the prime mover. Further, the transmission restricts the rotation of the parking gear by moving the detent member to the detent position. In other words, the transmission also serves as a part of the parking mechanism which keeps the vehicle to be in a stopped condition during the vehicle being stopped.

According to the transmission thus structured, the cam member for moving the detent member to the detent position or to the detent released position is provided at the fork shaft. Thus, the transmission can operate the cam member by utilizing the mechanism for moving the fork shaft in an axial direction. Accordingly, without adding a parking rod which supports the cam member as structured in a conventional manner, the parking mechanism can be provided. The transmission provided with a part of the parking mechanism can reduce the number of components and reduce the manufacturing cost as compared to the conventional device. Further, since the transmission provided with a part of the parking mechanism can be downsized which leads to the improvement in the installability of the transmission to the vehicle.

(2) Further, the speed change gear connected to the rotation shaft by the connecting member is arranged at only one side of the connecting member in an axial direction and the connecting member is moved from a neutral position where the connecting member is in the disconnected condition to a shift position where the connecting member is positioned at the one side in an axial direction in response to the axial movement of the fork shaft so that the speed change gear is connected to the rotation shaft to be changed over to the connected condition and the fork shaft moves the connecting member from the axial position where the connecting member is moved to the neutral position to the other side in the axial direction so that the connecting member is kept to the disconnected condition and the cam member moves the detent member to the detent position.

According to this structure, the connecting member is intended only for the connection of the speed change gear arranged at the one side in the axial direction and changes over the connected condition and the disconnected condition thereof. In other words, there is no speed change gear existed at the other side of the connecting member in the axial direction that is to be connected to the rotation shaft by the connecting member. The transmission is structured to be provided with a cam member provided at the fork shaft which moves the connecting member in an axial direction. According to this structure, when the fork shaft moves the connecting member from the axial position for moving thereof to the neutral position to the other side in the axial direction, the cam member moves the detent member from the detent released position to the detent position thereby to restrict the rotation of the parking gear. At this time, the connecting member does not have any speed change gear to be connected at the other side of the connecting member in the axial direction and therefore, the disconnected condition is maintained.

The fork shaft of the transmission is movably supported on the case and movable at least by an axial stroke needed for change over operation of the connecting member between the connected condition and the disconnected condition. The cam member is provided on the fork shaft for the purpose of moving the connecting member in the axial direction. For this purpose, the fork shaft is movably supported on the case and in addition to the above axial stroke, is further movable by an axial stroke needed for the cam member to move the detent member to the detent position or the detent released position. In other words, according to thus structured transmission, since an axial position is set at which the cam member is operable in addition to the axial position to be decided at which the fork shaft per se is operable, it is necessary to allow the axial movement to the respective axial positions. The transmission may be provided with a connecting member for disposing a speed change gear for the connection only at one side thereof depending on the number of speed change stages and the layout of the speed change gear. Therefore, the stroke for the movement of the fork shaft can be relatively easily increased by structuring the transmission as explained above. Thus, the fork shaft and the mechanism for axially moving the fork shaft can be effectively utilized. Further, a parking mechanism can be added without increasing the length of the transmission as a whole in an axial direction.

(3) The transmission further includes the speed change gear connected to the rotation shaft by the connecting member, the speed change gear including a first speed change gear arranged at one side of the connecting member in an axial direction and a second speed change gear arranged at the other side of the connecting member in the axial direction and the connecting member changes the disconnected condition over to the connected condition by connecting the first speed change gear with the rotation shaft at a first shift position positioned from the neutral position providing the disconnected condition to the one side in the axial direction in response to the axial movement of the fork shaft and changes over to the connected condition by connecting the second speed change gear with the rotation shaft at a second shift position positioned from the neutral position to the position at the other side in the axial direction, whereby the axial width of the second speed change gear is set to be larger than the axial width of the first speed change gear and wherein the connecting member is kept to the connected condition by moving the connecting member from the axial position where the fork shaft moves the connecting member to the second shift position to the other side in the axial direction, thereby to move the detent member to the detent position by the cam member.

According to this structure, the first and the second speed change gears with different axial width lengths are arranged at the one side and the other side of the connecting member in the axial direction, respectively and the connecting member changes the connection condition between the connected and disconnected conditions under the first and the second speed change gears being the subject for the connection and the transmission includes the cam member at the fork shaft which moves the connecting member in the axial direction. Thus, when the fork shaft moves the connecting member from an axial position for moving the connecting member to the second shift position to the other side in the axial direction, the cam member moves the detent member from the detent released position to the detent position thereby to restrict the rotation of the parking gear. At this time, the connecting member keeps the connected condition since connecting member is in the connected condition in the second shift position.

It is noted here that as explained above, the fork shaft is movably supported on the case by a stroke necessary for operating the cam member in addition to a stroke necessary for change over operation of the connecting member. In other words, the transmission thus structured is necessary to be designed to allow movement to two respective positions in an axial direction, one axial position for fork shaft to be positioned so that the fork shaft is movable to a first shift position, a neutral position and a second shift position and the other axial position for cam member to be operable. In addition, a transmission may include a plurality of speed change gears with different axial width length placed in both sides of the connecting member for the purpose of connection. In the speed change gears, the axial distance from a portion to be connected to the rotation shaft by the connecting member to a portion having a tooth surface of the second speed change gear may be set to be longer than the axial distance of the first speed change gear depending on the number of speed changes and the layout of the speed change gears. Accordingly, by structuring the transmission above, the stroke of the movement of the fork shaft can be relatively easily increased. Thus, the fork shaft and the mechanism for moving the fork shaft in an axial direction can be effectively utilized. In addition, a parking mechanism can be added without increasing the length in axial direction of the transmission as a whole.

(4) Further, the rotation shaft supports the output side speed change gear and includes a plurality of output shafts, having different axial lengths and the parking gear may be fixed to the shorter axial length output shaft among the plurality of output shafts.

It is noted here that in case of providing the parking gear of the parking mechanism at the rotation shaft of the transmission, it is necessary to provide an extra space at the rotation shaft for placing the parking gear thereon at least by the axial width length of the parking gear. Further, the transmission may include a plurality of output shafts with different axial lengths depending on a structural design. Accordingly, by fixing the parking gear to an output shaft with a relatively shorter axial length, the space for placing the parking gear can be assured to prevent the transmission as a whole from becoming oversized.

(5) Further the transmission may include the rotation shaft supporting a plurality of speed change gears and including mutually co-centrically arranged first input shaft and second input shaft and supporting the input side speed change gears of the plurality of speed change gears and a first and a second output shaft arranged in parallel with the first and the second input shafts respectively and supporting the output side speed change gears of the plurality of speed change gears. The transmission further includes a dual clutch having a first clutch for transmitting a rotation driving force of the prime mover to the first input shaft and a second clutch for transmitting the rotation driving force to the second input shaft wherein the parking gear is fixed to any one of the first and the second output shafts.

According to the structure above, the transmission is of dual clutch type and the parking gear is fixed to any one of the first and the second output shafts. The dual clutch type transmission includes a mechanism that can allow a high speed shift change by changing over the connection of the prime mover with the first and the second input shafts respectively, by using two clutches. In this type of dual clutch transmission, a plurality of connecting members and the fork shaft are provided for selectively connecting the plurality of speed change gears supported on the first and the second output shafts. This dual clutch type transmission generally raises concerns that the transmission may be oversized in a radial direction of the rotation shaft. Therefore, as explained above, by providing a cam member on an existing fork shaft, a parking mechanism can be suitably added without newly adding a parking rod or the like.

### BRIEF EXPLANATION OF ATTACHED DRAWINGS

[Fig. 1] First Embodiment: Fig. 1 is a block view showing a part of the gears seen from the axial direction of the transmission 1;
[Fig. 2] Fig. 2 shows a skeleton view showing overall structure of the transmission 1;
[Fig. 3] Fig. 3 is a schematic view of the shift mechanism 70c and the parking mechanism 80;
[Fig. 4] Fig. 4 is a view showing the main parts of the shift mechanism 70c in a neutral condition and the parking mechanism 80 in an unlock condition;
[Fig. 5] Fig. 5 is a view showing the main parts of the shift mechanism 70c in a shift condition and the parking mechanism 80 in the unlock condition;
[Fig. 6] Fig. 6 is a view showing the main parts of the shift mechanism 70c in a neutral condition and the parking mechanism 80 in a lock condition;
[Fig. 7] Second Embodiment: Fig. 7 is a skeleton view showing overall structure of the transmission 101;
[Fig. 8] Fig. 8 is a schematic view of the shift mechanism 170c and the parking mechanism 80;
[Fig. 9] Fig. 9 is a view showing the sin a neutral condition and the parking mechanism 80 in an unlock condition;
[Fig. 10] Fig. 10 is a view showing the shift mechanism 170c in the first speed change condition and the parking mechanism 80 in an unlock condition;
[Fig. 11] Fig. 11 is a view showing the shift mechanism 170c in the second connection condition and the parking mechanism 80 in an unlock condition; and
[Fig. 12] Fig. 10 is a view showing the shift mechanism 170c in the second connection condition and the parking mechanism 80 in a lock condition.

### THE EMBODIMENTS FOR IMPLEMENTING THE INVENTION

The embodiments of the transmission associated with the present invention will be explained with reference to the attached drawings

### <First Embodiment>

### (Structure of the transmission 1)

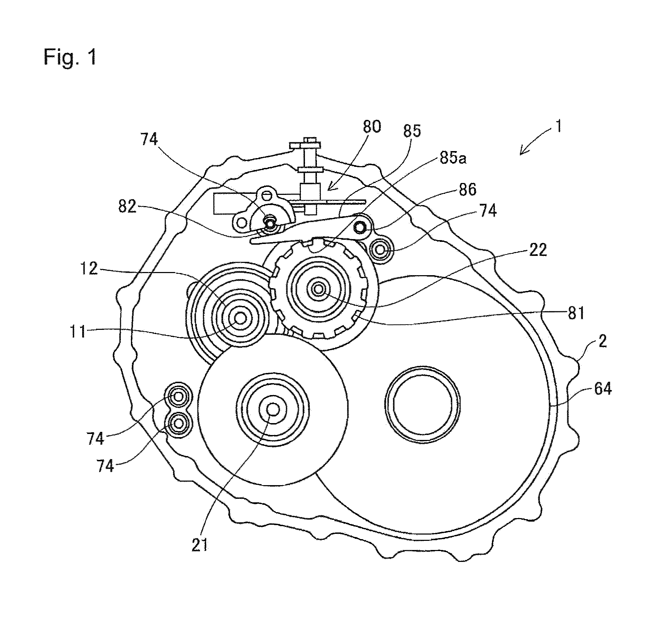

The transmission 1 according to the embodiment will be explained with reference to Figs. 1 through 3. The transmission 1 is of the dual clutch type transmission installed in the vehicle. The transmission 1 includes a plurality of rotation shafts 11, 12, 21 and 22 rotatably supported on a case 2, a dual clutch 30 for transmitting the rotation driving force of an internal combustion engine E/G to the rotation shafts, a plurality of speed change gears 41-46, 51-56 and 61-64 rotatably supported on the rotation shafts for providing a forward or a reverse speed change stage, a shift mechanism 70a through 70d for selectively establishing the each speed change stage and a parking mechanism 80 for keeping a stopping condition of the vehicle. The case 2 supports each shaft by means of a plurality of bearings and at the same time the case 2 accommodates a lubricant therein for supplying to sliding portions included in the plurality of gears and the shift mechanism 70a through 70d. Further, the case 2 also accommodates dual clutch 30 in a clutch housing (not shown). The internal combustion engine E/G is a driving power source installed in the vehicle and corresponds to the prime mover.

The first input shaft 11 is formed to be of a hollow shaft shape and is a rotation shaft rotatably supported on the case 2 by means of bearing. The outer peripheral surface of the first input shaft 11 is provided with a portion for supporting the bearing and a plurality of externally toothed splines. Further, the first input shaft 11 is directly provided with the first speed drive gear 41 and a fifth speed drive gear 45 with a large diameter. The outer peripheral surface of the first input shaft 11 is provided with the externally toothed splines into which a third speed drive gear 43 is fitted by a spline engagement. Further, the first input shaft 11 is provided with a connection shaft portion for connecting with a first clutch 31 of the dual clutch 30.

The second input shaft 12 is formed to be of a hollow shaft shape and is a rotation shaft rotatably supported on a part of the outer periphery of the first input shaft 11 by means of a plurality of bearings. The second input shaft 12 is also rotatably supported on a clutch housing of the case 2 by means of bearing. This second input shaft 12 is co-centrically arranged with the first input shaft 11 and relatively rotatable therewith. Similarly to the first input shaft 11, the second input shaft 12 is provided with a portion for disposing the bearing and a plurality of externally toothed gear wheels. The second input shaft 12 is provided with a second speed drive gear 42 and a large diameter four speed drive gear 44 (sixth speed drive gear 46). The fourth speed drive gear 44 engages with a fourth speed driven gear 54 and a sixth speed driven gear 56 and is formed to be a common gear as a drive side gear for establishing fourth and sixth speeds. The second input shaft 12 is provided with a connecting shaft portion to be connected to the second clutch 32 of the dual clutch 30.

The first output shaft 21 is disposed in the case 2 in parallel with the second input shaft 11 and is a rotation shaft rotatably supported on the case 2 by means of bearing. Further, the first output shaft 21 is provided with a final speed reduction gear 61 and a plurality of externally toothed splines on the outer peripheral surface thereof. Each hub 71 of the shift mechanisms 70a and 70b is engaged with the externally toothed splines of the first output shaft 21 and press-fitted therein. The final speed reduction gear 61 is engaged with a ring gear 64 of the differential gear mechanism. The first output shaft 21 is further provided with a supporting portion for allowing idle rotation of a first speed driven gear 51, a third speed driven gear 53, a fourth speed driven gear 54 and a reverse speed gear 63.

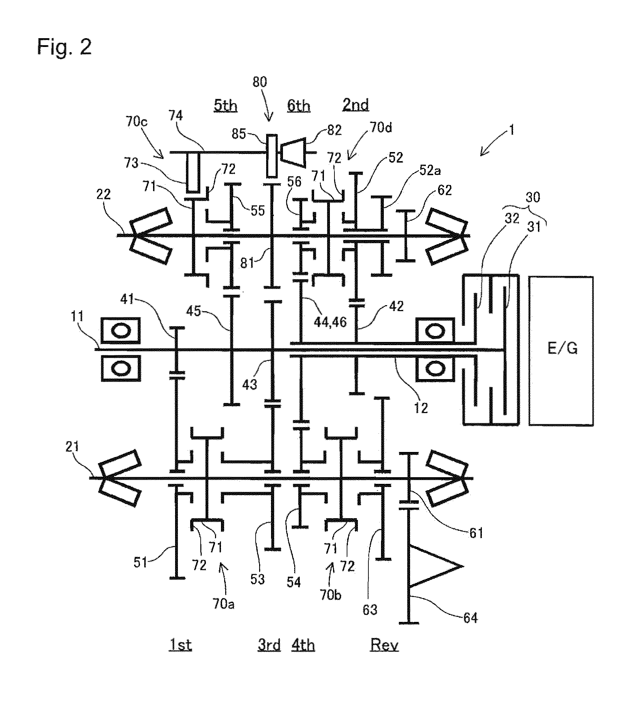

The second output shaft 22 is disposed in the case 2 in parallel with the first input shaft 11 and is a rotation shaft rotatably supported on the case 2 by means of bearing. Further, the second output shaft 22 is provided with a final speed reduction gear 62 and a plurality of externally toothed splines on the outer peripheral surface thereof, as similar to the structure of the first output shaft 21. Each hub 71 of the shift mechanisms 70a and 70b which are explained later in detail and a parking gear 81 of the parking mechanism 80 are engaged with the externally toothed splines of the second output shaft 22 and press-fitted therein. The final speed reduction gear 62 is engaged with the ring gear 64 of the differential gear mechanism. The second output shaft 22 is further provided with a supporting portion for allowing idle rotation of a second speed driven gear 52, a fifth speed driven gear 55 and a sixth speed driven gear 56. It is noted here that according to this embodiment, as shown in Fig. 2, the length of the second output shaft 22 is shorter than the length of the first output shaft 21 due to the difference of the supporting gears and the layout of each speed stage in the transmission 1.

As shown in Fig. 2, the dual clutch 30 includes a first clutch 31 for transmitting the rotation driving force of the internal combustion engine E/G to the first input shaft 11 and a second clutch 32 for transmitting the rotation driving force of the internal combustion engine E/G to the second input shaft 12. The dual clutch 30 is housed in the clutch housing of the case 2 and is arranged to be in co-centric with the first and the second input shafts 11 and 12. The first clutch 31 is connected to the connecting shaft portion of the first input shaft 11 and the second clutch 32 is connected to the connecting shaft portion of the second input shaft 12. The dual clutch 30 is used to switch over the connection with the internal combustion engine E/G by the first and the second clutches 31 and 32 based on the control command inputted from the control device of the vehicle. By this structure, the dual clutch type transmission can perform a high speed shift change by changing over the clutches which transmit the rotation driving force by establishing in advance the speed change stage to be used next.

The reverse drive gear 63 is provided at the supporting portion of the reverse drive gear formed on the first output shaft 21 and is idly rotatable. According to this embodiment, the reverse drive gear 63 is rotatably connected to and always engaged with a small diameter gear 52a formed integrally with the second sped driven gear 52. The ring gear 64 is always rotatably connected to the first and the second output shafts 21 and 22 by engaging with the final speed reduction gear 61 and the final speed reduction gear 62. d This ring gear 64 forms the differential mechanism as the final gear of the transmission 1 and is connected to the driving wheels through a drive shaft.

The shift mechanisms 70a through 70d are controlled by the control device of the vehicle and are formed to be a switching mechanism for switching over the condition between the shift condition in which each speed change stage is established in response to the shift operation and a neutral condition in which no speed change stage is established. According to this embodiment, the transmission 1 is provided with four shift mechanisms 70a through 70d at four places as shown in Fig. 2. Each shift mechanism has different intended speed change gears to be connected to the first output shaft 21 or the second output shaft 22 among the speed change gears. The shift mechanism 70a has the intended speed change gears to be connected, which are the first speed driven gear 51 and the third speed driven gear 53. The shift mechanism 70b has the intended speed change gears to be connected, which are the fourth speed driven gear 54 and the reverse drive gear 63. The shift mechanism 70c has the intended speed change gear to be connected, which is only the fifth speed driven gear 55. The shift mechanism 70d has the intended speed change gears to be connected, which are the second speed driven gear 52 and the sixth speed driven gear 56.

These shift mechanisms 70a through 70d include as shown in Fig. 2, hub 71, sleeve 72 (which corresponds to the connecting member of the invention), shift fork 73, fork shaft 74, motor 75, worm gear 76 and worm wheel 77. The hub 71 is formed to be of a hollow disk shape with internally toothed splines and externally toothed splines. The hub 71 is press-fitted in the externally toothed splines of the first output shaft 21 or the second output shaft 22 in spline engagement therewith for unitary rotation with either one of the output shafts 21 and 22.

The sleeve 72 is engaged with the externally toothed spline of the hub 71 to be movable in axial direction relative to the hub 71. This sleeve 72 is engageable with a piece gear portion of the speed change driven gears 51 through 56 or the reverse drive gear 63 by slidably moving in the axial direction of the rotation shaft. When the sleeve 72 engages with each of the piece gear portions, each gear is connected to and becomes in a unitary rotatable condition with the supported output shaft. When the sleeve 72 is slidably moved in an axial direction, the sleeve 72 biases a gear which has the intended connection for the synchronizing ring (not shown) to enable the gear to be connected with the output shaft by synchronizing the number of rotation speed of the gear and the output shaft.

The shift fork 73 is fixed to the fork shaft 74 and is engaged with the peripheral groove formed on the outer peripheral surface of the sleeve 72. The fork shaft 74 is axially movable relative to the rotation shaft and is moved to an axial position in response to the shift operation. Thus, the sleeve 72 is connected to the fork shaft 74 via the shift fork 73 and is cooperatively movable with the axial movement of the fork shaft 74. In other words, the sleeve 72 changes over the condition between the connected condition where the speed change driven gears 51 through 56 or the reverse drive gear are connected to the supported output shaft and the disconnected condition where the each gear is disconnected from the output shaft, in response to the movement of the fork shaft 74 to the set axial position.

The motor 75 is provided at the external portion of the transmission 1 and serves as the electric motor which rotatably drives when electricity is supplied in response to the shift operation by the control device of the vehicle. Worm gear 76 is provided at the driving shaft of the motor 75 and is a gear which is rotated together with the rotation shaft in response to the rotation of the motor 75. The worm gear wheel 77 is fixed to an end of the shaft (not shown) rotatably supported on the case 2 and transmits rotation force of the engaged worm gear inside of the case 2. The other end of the shaft to which the worm gear wheel 77 is fixed is provided with a pinion gear engaged with a gear formed on the outer peripheral surface of the fork shaft 74.

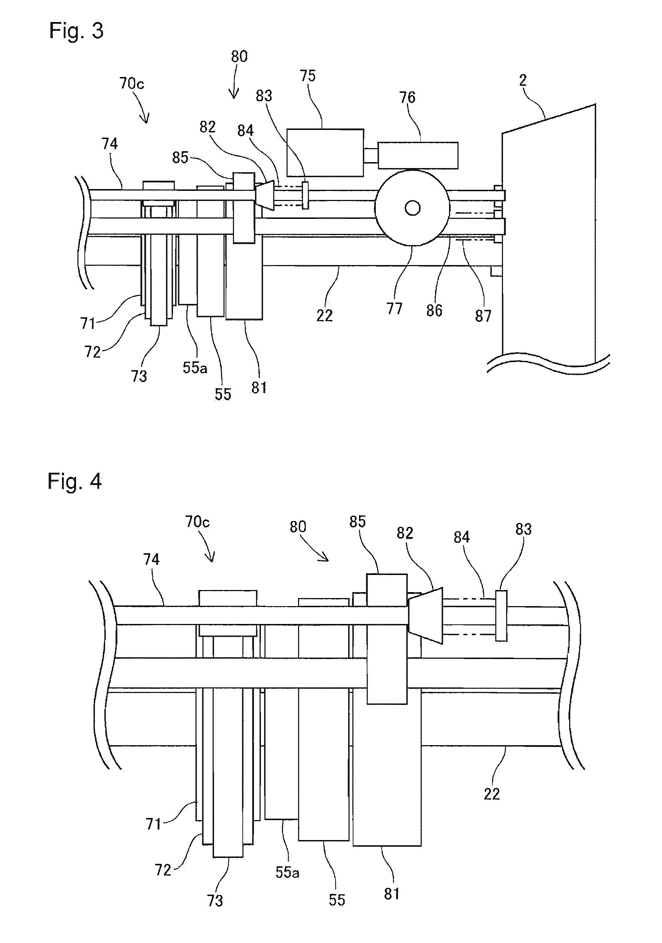

The shift mechanisms 70a through 70d thus structured move the fork shaft 74 to a predetermined axial position by driving the motor 75 connect the intended speed change gears with the first or second output shaft 21 or 22 and establish the intended speed change stage. It is noted here that the shift mechanisms 70a, 70b and 70d have the intended speed change gears to be connected which are disposed at both sides in axial direction of the respective sleeves 72. On the other hand, the shift mechanism 70c has the intended speed change gear to be connected which is disposed at only one side (right side in Fig.2) in the axial direction of the sleeve 72, i.e., the fifth speed driven gear 55 thereby to change over the condition between the connected and the connection released conditions. In other words, no intended speed change gear to be connected to the second output shaft 22 exists in the other side (left side in Fig. 3) of the sleeve 72 of the shift mechanism 70c.

The parking mechanism 80 is a mechanism for restricting the rotation of the parking gear 81 when the vehicle stopped and is in stopped condition to prevent the rotation of the shaft connected to the drive wheels and to keep the vehicle in stopped condition. This parking mechanism 80 includes, as shown in Fig. 1 and Fig. 2, a parking gear 81, cam 82 (which corresponds to the cam member of the present invention), a snap 83, a cam spring 84,a parking pawl 85 (which corresponds to the detent member of the present invention), a pawl supporting shaft 86 and a torsion spring 87. The parking gear 81 is provided with a plurality of external teeth on the outer peripheral surface and the plurality of external teeth is press-fitted in the externally toothed spline formed on the outer peripheral surface of the second output shaft 22 and fixed to the second output shaft 22. The parking gear 81 is fixed to the second output shaft 22 the axial length of which is shorter than that of the first output shaft 21.

The cam 82 includes a large diameter portion formed on one side in an axial direction of the rotation shaft and a small diameter portion formed continuously from the large diameter portion and the diameter of the small diameter portion is gradually decreased towards the other side in axial direction of the rotation shaft. The cam 82 is slidably provided on the fork shaft 74 of the shift mechanism 70c. The snap 83 is of disc shaped and fixed to the fork shaft 74 with a distance apart from the cam 82. The cam spring 84 is a coil compression spring disposed between the cam 82 and the snap 83 at the outer peripheral side of the fork shaft 74. One end of the cam spring 84 is fixed to the snap 83 and the other end thereof is fixed to the cam 82. Under the cam spring 84 being non-loaded, the cam 82 keeps a distance from the snap 83 by the free length of the cam spring 84.

The parking pawl 85 is supported on the case 2 through the pawl supporting shaft 86 and includes a detent pawl 85a which engages with the external teeth of the parking gear 81. This detent pawl 85a restricts the rotation of the parking gear 81 by engaging with the external teeth formed on the outer peripheral surface of the parking gear 81. In other words, the parking pawl 85 is movable between the detent position where the rotation of the parking gear 81 centering on the pawl supporting shaft 86 is restricted by the engagement between the external teeth of the parking gear 81 and the detent pawl 85a and the detent released position where the rotation of the parking gear 81 is allowed by separating the detent pawl 85a from the external teeth of the parking gear 81.

The pawl supporting shaft 86 is rotatably supported on the case 2 and the torsion spring 87 is arranged around the outer peripheral side thereof. The torsion spring 87 is used for the return spring and one end thereof is fixed to the case 2 and the other end thereof is fixed to the pawl supporting shaft 86. Thus, the parking pawl 85 is biased in a direction where the detent pawl 85a is separating from the external teeth of the parking gear 81 by a biasing force of the torsion spring 87 through the pawl supporting shaft 86.

The back surface portion (upper portion of the parking pawl 85 in Fig. 1) of the parking pawl 85 opposite to the position where the detent pawl 85a is provided is in contact with the outer peripheral surface of the fork shaft 74 or the cam 82. In other words, the parking pawl 85 is moved to the detent released position when the back surface portion of the parking pawl 85 is in contact with the fork shaft 74 or the small diameter portion of the outer peripheral surface of the cam 82. Further, when the back surface portion of the parking pawl 85 is in contact with the large diameter portion of the outer peripheral surface of the cam 82, the parking pawl 85 is moved to the detent position. Since the cam 82 of the parking mechanism 80 is provided on the fork shaft 74, the parking pawl 85 is moved to the detent position or the detent released position in response to the axial position of the fork shaft 74.

### (Operation of Transmission 1)

Next the operation of the transmission 1 will be explained with reference to Figs. 4 through 6. The transmission 1 performs shift change and transmission of the rotation driving force by controlling the dual clutch 30 and the shift mechanism 70a through 70d. Further, the parking mechanism 80 which keeps the vehicle to be in a stopped condition is provided with the cam 82 and others for operating the parking pawl 85 on the fork shaft 74. In other words, the shift mechanism 70c of the transmission 1 serves as a part of the parking mechanism 80. This aims at the operation of parking pawl 85 without adding a conventional parking rod for supporting cam or the like. According to the embodiment, the parking mechanism 80 is operated in response to the axial position of the fork shaft 74 of the shift mechanism 70c. Accordingly, the operation of the shift mechanism 70c and the operation of the parking mechanism 80 will be explained hereinafter.

First, when the transmission 1 is under a condition that the fifth speed stage is not necessary to be established, such as the condition that the vehicle is running under the third speed stage, in this case, the transmission 1 moves the fork shaft 74 in an axial direction so that the sleeve 72 becomes in a neutral position of the disconnected condition as shown in Fig. 4. Under the axial position of the fork shaft 74 to be at the set position, the back surface portion of the parking pawl 85 is in contact with the outer peripheral surface of the fork shaft 74 which defines the detent released position. Accordingly, the shift mechanism 70c is in the neutral condition and that the parking mechanism 80 is in unlock condition where the rotation of the parking gear 81 is not restricted.

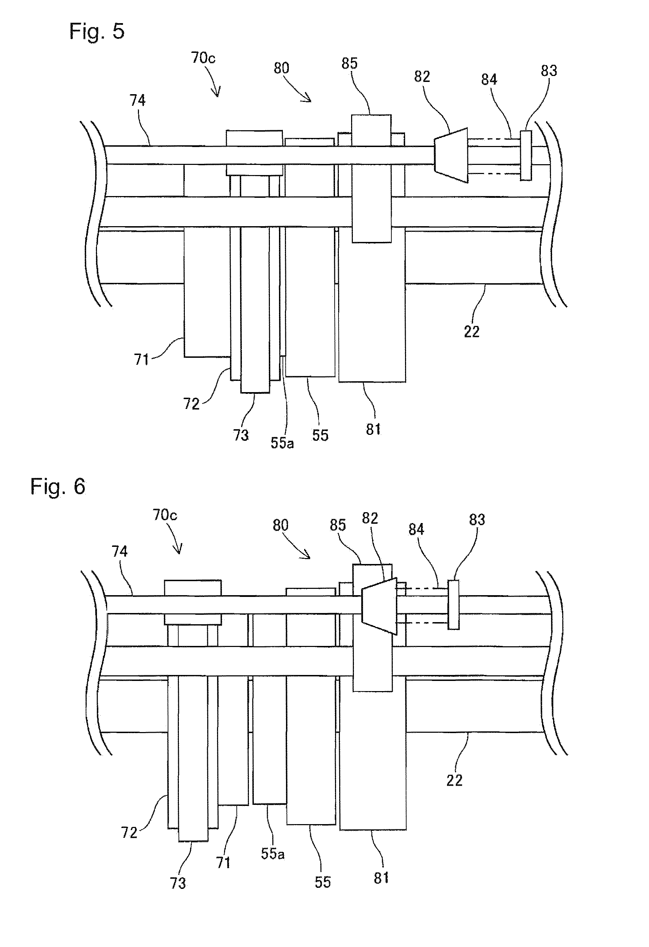

Next, the vehicle is starting to run under the fourth speed, which is the condition that necessitates the transmission 1 to establish the fifth speed stage in advance. As shown in Fig. 5, the transmission 1 moves the fork shaft 74 in the one side (right side in Fig. 5) in an axial direction to be shifted to a shift position that the sleeve 72 is in connected condition. Then after synchronization of the rotation speed of the fifth speed driven gear 55 which is the intended gear for connection with the rotation speed of the second output shaft 22 by operation of the synchronizing ring, etc., the sleeve 72 engages with the piece gear portion 55a of the fifth speed driven gear 55 thereby to establish the connected condition. After the position of the fork shaft 74 has been set in an axial position where the sleeve 72 is shifted to the shift position, the parking pawl 85 is brought into contact with the outer peripheral surface of the fork shaft 74 at the back surface portion of the sleeve 72 and is positioned in the detent released position. Accordingly, the shift mechanism 70c is in a shifted condition that the fifth speed stage has been established and at the same time the parking mechanism 80 is in an unlock condition that the rotation of the parking gear 81 is not restricted.

Next, when the vehicle stops and maintains a vehicle stopped condition that necessitates the transmission 1 to keep this vehicle stopped condition. Under such situation, as shown in Fig. 6, the transmission 1 moves the fork shaft 74 to the other side (left side in Fig. 6) in an axial direction from the axial position where the sleeve 72 is moved to the neutral position. It is noted here that there is no speed change gear provided at the other side of the sleeve 72 of the shift mechanism 70c in an axial direction that is to be connected to the second output shaft 22 and accordingly, the sleeve 72 can maintain the disconnected condition.

When the cam 82 moves to the other side in axial direction with the movement of the fork shaft 74, the back surface portion of the parking pawl 85 is brought into contact with the large diameter portion of the cam 82 thereby being moved to the detent position against the biasing force of the torsion spring 87. In other words, the detent pawl 85a of the parking pawl 85 engages with the external teeth of the parking gear 81. Accordingly, the parking mechanism 80 becomes in a lock condition that the rotation of the parking gear 81 is restricted and the shift mechanism 70c becomes in the neutral condition.

It is noted here that when the parking pawl 85 moves to the detent position by the biasing action between the back surface portion and the cam 82, the movement to the detent position may be sometimes interrupted by the contact between the detent pawl 85a and the external teeth of the parking gear 81. In this case, the cam spring 84 disposed between the cam 82 and the snap 83 is compressed to slidably move the cam 82 relative to the fork shaft 74. Under this situation, when the drive wheels are rotated by a longitudinal force of the vehicle or the like, the second output shaft 22 is rotated through the ring gear 64 and the final speed reduction gear 62. Upon rotation of the second output shaft 22, the phase of the parking gear 81 relative to the parking pawl 85 is varied and the detent pawl 85a becomes engageable with the external tooth of the parking gear 81. Then the cam spring 84 is extended so that the large diameter portion of the cam 82 is brought into contact with the back surface portion of the parking pawl 85. Thus, the parking pawl 85 can be moved to the detent position to be in the lock condition that the rotation of the parking gear 81 is restricted without moving the fork shaft 74 in such situation.

Then, after the vehicle stopped condition is released, the fork shaft 74 is moved to an axial position where the sleeve 72 is moved at least to the neutral position. As shown in Fig. 3, the transmission 1 operates the shift mechanism 70c to be in the neutral position again and at the same time operates the parking mechanism 80 to be in the unlock condition that the rotation of the parking gear 81 is not restricted.

### (Effects achieved by the Transmission 1)

As explained, the transmission 1 can achieve the following effects. The transmission 1 is structured to have the cam 82 to be provided on the fork shaft 74 for moving the parking pawl 85 to the detent position or the detent released position. Thus, the transmission 1 can operate the cam 82 by utilizing the shift mechanism 70c which moves the fork shaft 74 in an axial direction. Accordingly, the parking mechanism 80 can be arranged without adding a parking rod or the like which supports the cam, which is usually added in a conventional device. Thus, the transmission 1 which is provided with a portion of the parking mechanism 80 can reduce the number of parts and the manufacturing cost compared to conventional transmissions. Further, since the transmission 1 can be downsized, the installability of the transmission to the vehicle can be improved.

Further, the fork shaft 74 of the shift mechanism 70a through 70d is movably supported on the case 2 by an axial stroke, i.e., by at least a distance from the neutral position to the shift position which is necessary for changing the sleeve 74 to be operated to be in the connected condition or to be in the disconnected condition. Further, since the transmission 1 according to the embodiment is provided with the cam 82 on the fork shaft 74 for the purpose of moving the sleeve 72 to the shift position, in addition to the necessary stroke above, a further stroke in an axial direction is necessary for the cam 82 to be operable to be provided on the fork shaft 74. In other words, the transmission 1 is necessary to be structured so that the fork shaft is allowed to set a further axial position for the operation of the cam 82 in addition to the axial position set per se for the fork shaft 74.

It is noted here that a sleeve 72 may be provided, at only one side of which are provided speed change gears for the intended connection such as the sleeve of the shift mechanism 70c depending on the number of speed changes to be set and the layout of the speed change gears. Therefore, by providing the cam 82 on the fork shaft 74 of the shift mechanism 70c, the necessary stroke for the movement of the fork shaft 74 can be relatively easily increased. Accordingly, the fork shaft and the mechanism for moving the fork shaft in an axial direction can be effectively utilized. Further, the parking mechanism 80 can be added by suppressing the increase of length of the transmission 1 as a whole in an axial direction.

The parking gear 81 is fixed to the second output shaft 22 which axial length is shorter than that of the first output shaft 21. When the parking gear 81 of the parking mechanism 80 is provided at the rotation shaft of the transmission 1, a space for disposing the parking gear on the rotation shaft is necessary to be increased by at least the width in axial direction of the parking gear 81. Further, since the transmission 1 is of dual clutch type, the transmission 1 includes a plurality of outputs and due to the different types of speed change gears to for supporting and the layout of each speed change stage in the transmission 1, the length of the second output shaft 22 is designed to be shorter than the length of the first output shaft 21. Accordingly, by fixing the second output shaft 22 which is shorter than the first output shaft in the axial direction, the space for disposing the parking gear 81 can be secured thereby to prevent the transmission 1 as a whole from becoming oversized.

The transmission 1 is of a dual clutch type and is structured that the parking gear 81 is fixed to the second output shaft 22. The dual clutch type transmission 1 is provided with a plurality of shift mechanisms 70a through 70d for selectively connecting a plurality of speed change gears. This may raise an issue that the transmission 1 may be oversized in a radial direction of the rotation shaft. Accordingly, as explained in this embodiment, by providing the cam 82 on the existing fork shaft 74, the parking mechanism 80 can be appropriately added without newly adding parts such as parking rod. Accordingly, it is particularly useful for the invention to be applied to a dual clutch type transmission.

### <Second Embodiment>

The transmission 101 of this embodiment is different in structure of the shift mechanism having the fork shaft 74 on which the cam 80 is provided with respect to the transmission 1 of the first embodiment. In more detail, according to the transmission 1 of the first embodiment, the cam 82 is provided on the fork shaft 74 of the shift mechanism 70c at only one side of which in axial direction the speed change gears intended for connection are arranged. On the contrary, according to the transmission 101 of this embodiment, the cam 82 is provided on the fork shaft 174 of the shift mechanism 170c at both sides of which in axial direction the speed change gears intended for connection are arranged. It is noted here that the other structures are substantially same as those of the first embodiment and therefore the detail explanation thereof is omitted and only the different points will be explained hereinafter.

### (Structure of Transmission 101)

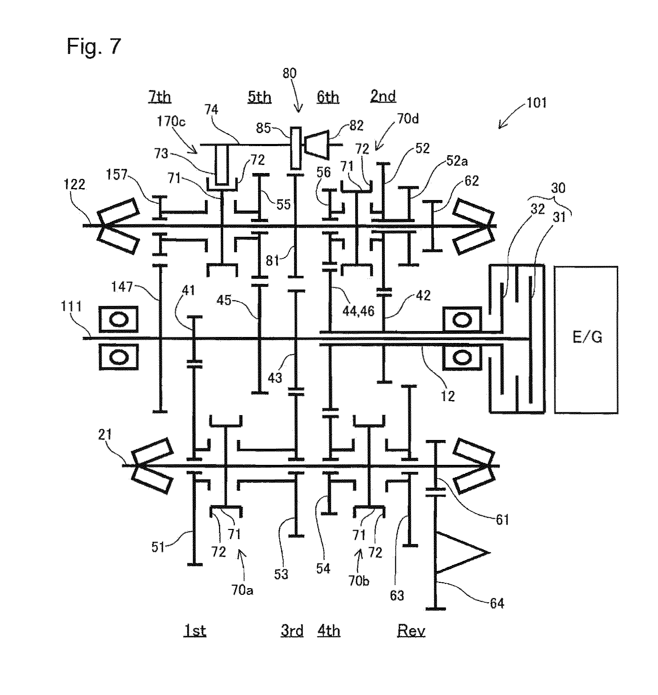

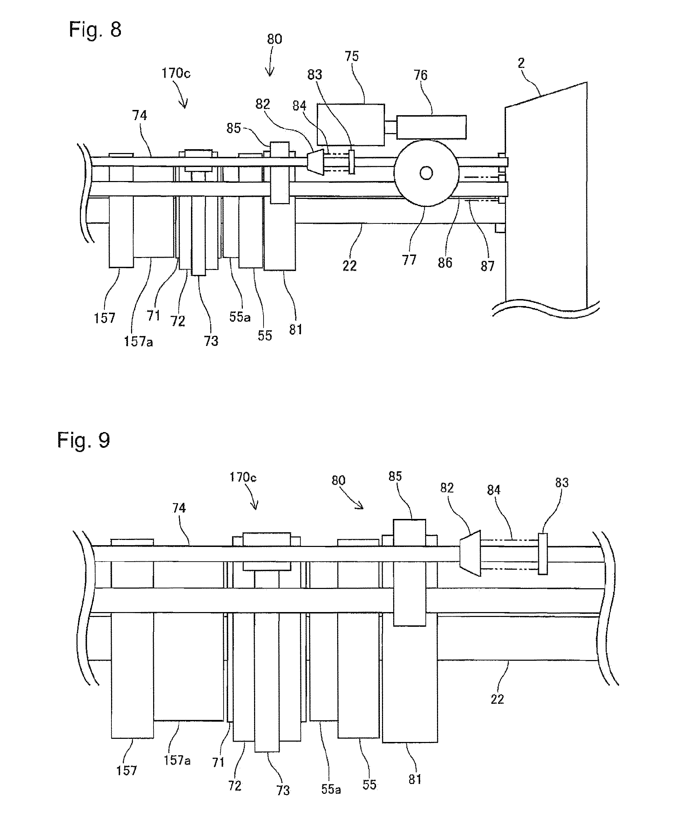

The structure of the transmission 101 of this embodiment will be explained hereinafter with reference to Figs. 7 and 8. The transmission 101 includes a first input shaft 111 rotatably supported on the case 2, and a second output shaft 122, speed change gears 41 through 46, 147, 51 through 56, 157 and 61 through 64 constituting seven forward speeds or a reverse drive speed, the shift mechanisms 70a, 70b, 170c and 70d for selectively establishing speed stages and a parking mechanism 80 for keeping the vehicle stopped condition. The first input shaft 111 is a rotation shaft which is rotatably supported on the case 2 for relative rotation therewith by means of bearing. The first input shaft 111 is provided with an externally toothed spline on the outer peripheral surface thereof and the third speed drive gear 43 and the seventh speed drive gear 147 are press-fitted into the externally toothed spline with splined engagement.

The second output shaft 122 is arranged in parallel with the first input shaft 111 within the case 2 and is a rotation shaft rotatably supported on the case 2 relative thereto by means of bearing. The second output shaft 122 is provided with a plurality of externally toothed splines on the outer peripheral surface thereof. The hubs 71 of each shift mechanism 170c and 70d and the parking gear 81 of the parking mechanism 80 are press-fitted into the externally toothed splines of the second output shaft 122 with splined engagement. The second output shaft 122 is further provided with a supporting portion for idly rotatably supporting the second speed driven gear 52, fifth speed driven gear 55, sixth speed driven gear 56 and the seventh speed driven gear 157.

It is noted here that according to this embodiment, as shown in Figs. 7 and 8, the width length in an axial direction of the seventh speed driven gear 157 is set to be longer than the width length in axial direction of the fifth speed driven gear 55 due to the difference in layout of the speed change gears in the transmission 101. The other structures such as the second input shaft 12, the first output shaft 21, the plurality of speed change gears which are to be supported on the rotation shafts and the dual clutch 30 are substantially the same as those explained in the first embodiment.

The shift mechanism 170c is controlled by the vehicle control device and is the mechanism for changing over the condition between the condition that speed stage depending on the shift operation is established and the neutral condition that no speed stage is established. According to this embodiment, as shown in Fig. 7, the transmission 101 is provided with four shift mechanisms 70a, 70b, 170c and 70d at four portions. The speed change gears intended for connection with the shift mechanism 170c are the fifth speed driven gear 55 disposed at one side (right side in Fig. 7) in axial direction of the sleeve 72 and the seventh speed driven gear 157 disposed at the other side (left side in Fig. 7).

The shift mechanism 170c thus structured moves the fork shaft 74 to a predetermined position in axial direction by rotationally driving the motor 75 and connects the intended gear with the second output shaft 122 to establish a certain speed stage. According to the embodiment, the fifth speed driven gear 55 corresponds to the first speed change gear of the invention and the seventh speed driven gear 157 corresponds to the second speed change gear of the invention. Further, the components constituting the shift mechanism 170c are substantially the same as the components of the first embodiment.

### (Operation of the Transmission 101)

Next, the operation of the transmission 101 will be explained with reference to Fig. 9 through 12. The transmission 101 is of a dual clutch type transmission and as similar to the transmission of the first embodiment, the shift mechanism 170c is used as a part of the parking mechanism 80. According to the embodiment, the parking mechanism 80 is operated in response to the axial position of the fork shaft 74 of the shift mechanism 170c and therefore, the operation of the shift mechanism 170c and the operation of the parking mechanism 80 will be explained.

First, when the transmission 1 is under a condition that the fifth speed stage is not necessary to be established, such as the condition that the vehicle is running under the third speed, in this case, the transmission 101 moves the fork shaft 74 in an axial direction so that the sleeve 72 becomes in a neutral position of the disconnected condition as shown in Fig. 9. Under the axial position of the fork shaft 74 to be at the set position, the back surface portion of the parking pawl 85 is in contact with the outer peripheral surface of the fork shaft 74 which is the detent released position. Accordingly, the shift mechanism 70c is in the neutral condition and that the parking mechanism 80 is in unlock condition where the rotation of the parking gear 81 is not restricted.

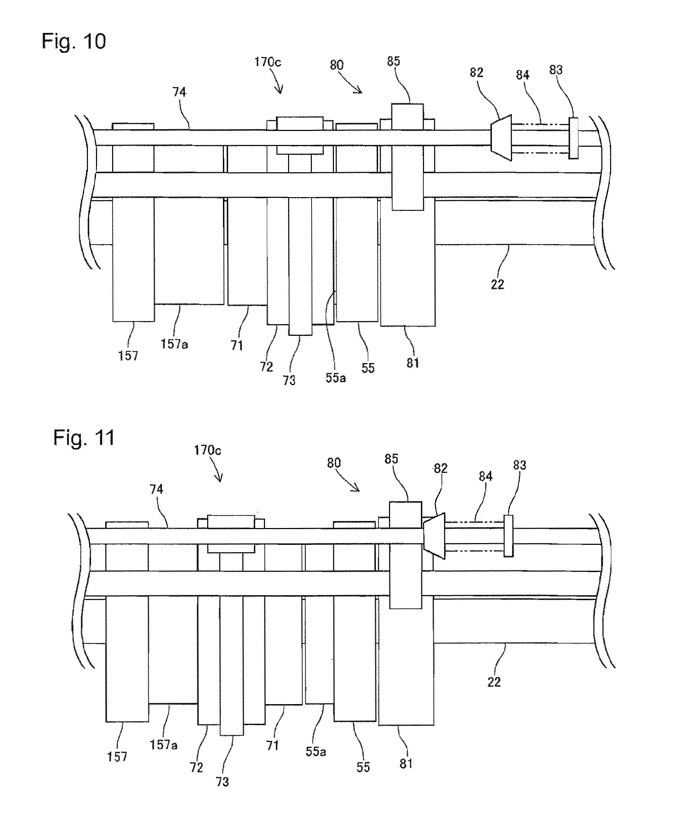

Next, the vehicle is running under the fourth speed, which is the condition that necessitates the transmission 101 to establish the fifth speed in advance. As shown in Fig. 10, the transmission 101 moves the fork shaft 74 in the one side (right side in Fig. 10) in an axial direction to be shifted to a shift position that the sleeve 72 is in connected condition. Then after synchronization of the rotation speed of the fifth speed driven gear 55 which is the intended gear for connection with the rotation speed of the second output shaft 122 by operation of the synchronizing ring, etc. the sleeve 72 engages with the piece gear portion 55a of the fifth speed driven gear 55 thereby to become the connected condition. The shift position of the sleeve 72 under this condition corresponds to the "first shift position" of the invention.

Next, when the vehicle is running under the sixth speed, the dual clutch type transmission 101 becomes the condition that the seventh speed has to be established in advance. Under such case, as shown in Fig. 11 the transmission 101 moves the fork shaft 74 to the other side (left side in Fig. 11) in an axial direction from the axial position where the sleeve 72 is moved to the connected position. Then after synchronization of the rotation speed of the seventh speed driven gear 157 which is the intended gear for connection with the rotation speed of the second output shaft 122 by operation of the synchronizing ring, etc. the sleeve 72 engages with the piece gear portion 157a of the seventh speed driven gear 157 thereby to become the connected condition. The shift position of the sleeve 72 under this condition corresponds to the "second shift position" of the invention.

Under the position of the fork shaft 74 being set so that the sleeve 72 may position to the first shift position or the second shift position, the parking pawl 85 is in detent released position under the back surface portion of the parking pawl 85 being in contact with the outer peripheral surface of the fork shaft 74. Accordingly, the shift mechanism 70c becomes in the shift position that the fifth speed or the seventh speed has been established and at the same time the parking mechanism 80 becomes in the unlock condition that the rotation of the parking gear 81 is not restricted.

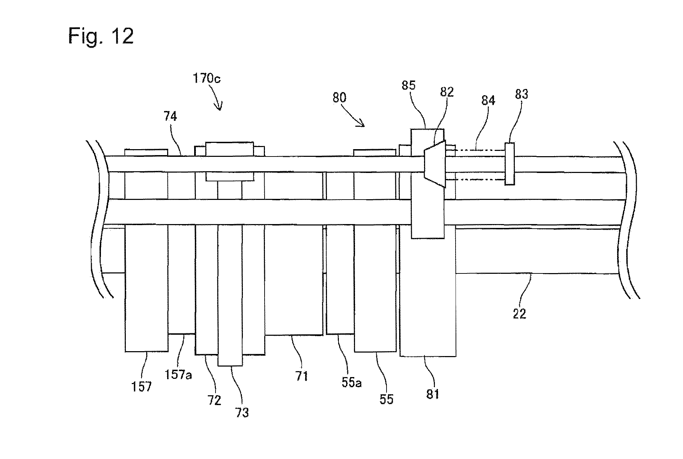

Next, when the vehicle stopped and becomes a vehicle stopped condition, which necessitates the transmission 101 to keep this vehicle stopped condition. Under such situation, as shown in Fig. 12, the transmission 101 moves the fork shaft 74 to the other side (left side in Fig.12) in an axial direction from the axial position where the sleeve 72 is moved to the second shift position. It is noted here that there is no speed change gear provided at the other side in axial direction of the sleeve 72 of the shift mechanism 70c that is to be connected to the second output shaft 122 (in this embodiment, the seventh speed driven gear 157) and accordingly, the sleeve 72 can maintain the connected condition.

When the cam 82 moves to the other side in axial direction with the movement of the fork shaft 74, the back surface portion of the parking pawl 85 is brought into contact with the large diameter portion of the cam 82 thereby to be moved to the detent position against the biasing force of the torsion spring 87. In other words, the detent pawl 85a of the parking pawl 85 engages with the external teeth of the parking gear 81. Accordingly, the parking mechanism 80 becomes in a lock condition that the rotation of the parking gear 81 is restricted and the shift mechanism 70c becomes in the shift condition.

Then, after the vehicle stopped condition is released, the fork shaft 74 is moved to an axial position where the sleeve 72 is moved at least to the neutral position. As shown in Fig. 9, the transmission 101 operates the shift mechanism 70c to be in the neutral position again and at the same time operates the parking mechanism 80 to be in the unlock condition that the rotation of the parking gear 81 is not restricted.

### (The Effects of the Transmission 101)

As explained above, the transmission 101 thus structured has the same effects as the transmission of the first embodiment. Further, the fork shaft 74 of the shift mechanism 170c is movably supported on the case 2 by an axial stroke, i.e., by at least a distance from the first shift position via the neutral position to the second shift position which is necessary for changing the sleeve 74 to be operated to be in the connected condition or to be in the disconnected condition. Further, since the transmission 101 according to the embodiment, as similar to the first embodiment, is provided with the cam 82 on the fork shaft 74 for the purpose of moving the sleeve 72 to each shift position, in addition to the necessary stroke above, a further stroke in an axial direction is necessary for the cam 82 to be operable to be provided on the fork shaft 74. In other words, the transmission 101 is necessary to be structured so that the fork shaft 74 is allowed to set a further axial position for the operation of the cam 82 in addition to the axial position set per se for the fork shaft 74.

It is noted here that the widths of the speed change gears arranged at both sides in axial direction of the sleeve 72 for connection may be set to be different in axial direction due to the number of speed change stage and the layout of the speed change gears. In detail, regarding to the fifth speed driven gear 55 and the seventh speed driven gear 157, the axial distance from the piece gear portion 157a which engages with the sleeve 72 to a portion of the seventh speed driven gear 157 having a tooth surface is set to be longer than the axial distance from the piece gear portion 55a to a portion of the fifth speed driven gear 55. Therefore, by providing the cam 82 on the fork shaft 74 of the shift mechanism 170c, the moving stroke for the fork shaft 74 can be relatively easily increased. Accordingly, the fork shaft and the mechanism for moving the fork shaft in an axial direction can be effectively utilized. Further, the parking mechanism 80 can be added by suppressing the increase of length of the transmission 101 as a whole in an axial direction.

### <Modified Embodiment of First & Second Embodiments>

According to the first and the second embodiments, the transmission 1 and 101 is shown as the dual clutch type transmission, however, another type, other than the dual clutch type, such as for example, a mechanical type automatic transmission may be applied. In other words, as long as the transmission includes a shift mechanism which selectively establishes each speed stage by the movement of the fork shaft in axial direction, it is possible to apply the invention to the transmission by providing the cam 82 on the fork shaft 74. In case of the mechanical automatic transmission provided with a plurality of output shafts, the output shaft having a shorter length in axial direction is fixed to the parking gear 81 thereby to assure the space for providing the parking gear 81. Thus the oversizing of the transmission 1 and 101 as a whole can be prevented.

Further, each of the shift mechanisms 70a through 70d, and 170c is provided with a motor 75 as a power source for moving the fork shaft 74 according to the previous embodiments, however, this may be structured that one of the fork shafts 74 is selected for operation from the plurality of fork shafts 74 and the motor 75 can be the common power source for all. Further, in order to move the fork shaft 74 in an axial direction, a worm wheel 77 is fixed one end of the shaft and the other end of the shaft is provided with a pinion gear. However, instead of using such pinion gear, an arm may be provided which engages with the fork shaft 74 and the fork shaft 74 is moved in an axial direction in response to the rotation of the worm wheel 74. In other words, as long as the structure in which the shift mechanism can move the fork shaft in axial direction, the present invention can be applied to such structure. Further, the invention can be applied to the structure in which the shift mechanism rotates the hydraulic cylinder using solenoid or the drum by driving a motor to move the fork shaft in an axial direction. Any of such modified structures can achieve the same effects of the invention.

The parking gear 81 of the parking mechanism 80 is fixed to the second output shaft 22 and 122. However, the parking gear 81 may be fixed to any rotation shaft that is always rotatably connected to the ring gear 64 which is connected to the drive wheel. In other words, since the final speed reduction gear 61 fixed to the first output shaft 11 is always rotatably connected to the ring gear 64, the parking gear 81 may be fixed to this first output shaft 11.

The present invention is intended to operate the parking mechanism 80 by utilizing the shift mechanism which moves the fork shaft 74 in an axial direction. For this reason, the rotation shaft supporting the speed change gears which are intended for connection with the shift mechanism having the fork shaft 74 on which the cam 82 is provided and the rotation shaft to which the parking gear is fixed are not necessarily be the same. For example, a cam member is provided on the fork shaft 74 of the shift mechanism 70c to which the fifth speed driven gear 55 supported on the second output shaft is the subject for connection and the parking gear 81 is fixed to the first output shaft.

According to the first and the second embodiments, the sleeve 72 is moved to the other side in an axial direction from the neutral position or the second shift position when the parking mechanism 80 is turned into the lock condition. It is noted here that in order to have the parking mechanism 80 to be in a lock condition, it is necessary for the fork shaft 74 to be movable in axial direction, in addition to the set axial position to which the fork shaft 74 per se has to be movable. Accordingly, for example, when the fork shaft moves to the additional axial position, the sleeve 72 is not necessarily be cooperatively moved with the fork shaft 74. For example, when the fork shaft moves to the additional axial position, the shift fork slides relative to the fork shaft 74, keeping the sleeve 72 to the original position. Further, the sleeve 72 is kept to the original position by temporarily disengaging the shift fork 73 from the peripheral groove formed on the outer peripheral surface of the sleeve 72.

### EXPLANATION OF REFERENCE NUMERALS

In the drawings:
1, 101: transmission, 2: case, 11, 111: first input shaft, 12: second input shaft, 21: first output shaft, 22, 122; second output shaft, 30: dual clutch, 31: first clutch, 32:second clutch, 41 to 46:, 147: speed change drive gear, 51 to 56, 157: speed change driven gear, 52a: small diameter gear, 55a, 157a: piece gear portion, 61, 62: final speed reduction gear, 63: reverse drive gear, 64: ring gear, 70a to 70d, 170c: shift mechanism, 71: hub, 72: sleeve (connecting member), 73: shift fork, 74: fork shaft, 75: motor, 76: worm gear, 77: worm wheel, 80: parking mechanism, 81: parking gear, 82: cam (cam member), 83: snap, 84: cam spring, 85: parking pawl (detent member), 85a: detent pawl, 86: pawl supporting shaft, 87: torsion spring, E/G: internal combustion engine (prime mover).

## Claims

1. A transmission comprising:
a case;
a rotation shaft rotatably supported on the case;
a speed change gear rotatably supported on the rotation shaft;
a fork shaft provided to be movable in an axial direction relative to the rotation shaft and movable in an axial direction in response to a shift operation;
a connecting member provided to be movable in an axial direction in cooperation with the movement of the fork shaft for changing over a connection condition of the speed change gear between a connected condition with the rotation shaft and a disconnected condition from the rotation shaft in response to an axial position of the fork shaft;
a parking gear fixed to the rotation shaft;
a detent member provided at the case to be engageable with the parking gear and movable between a detent position where the rotation of the parking gear is restricted and a detent released position where the rotation of the parking gear is allowed; and
a cam member provided on the fork shaft for moving the detent member to the detent position or to the detent released position in response to the axial position of the fork shaft.

2. The transmission according to claim 1, wherein,
the speed change gear connected to the rotation shaft by the connecting member is arranged at only one side of the connecting member in an axial direction;
the connecting member is moved from a neutral position where the connecting member is in the disconnected condition to a shift position where the connecting member is positioned at the one side in an axial direction in response to the axial movement of the fork shaft so that the speed change gear is connected to the rotation shaft to be changed over to the connected condition; and
the fork shaft moves the connecting member from the axial position where the connecting member is moved to the neutral position to the other side in the axial direction so that the connecting member is kept to the disconnected condition and the cam member moves the detent member to the detent position.

3. The transmission according to claim 1, wherein
the transmission includes the speed change gear connected to the rotation shaft by the connecting member, the speed change gear including a first speed change gear arranged at one side of the connecting member in an axial direction and a second speed change gear arranged at the other side of the connecting member in an axial direction;
the connecting member changes the disconnected condition over to the connected condition by connecting the first speed change gear with the rotation shaft at a first shift position positioned from the neutral position providing the disconnected condition to the one side in the axial direction in response to the axial movement of the fork shaft and changes over to the connected condition by connecting the second speed change gear with the rotation shaft at a second shift position positioned from the neutral position to the position at the other side in the axial direction;
the axial width of the second speed change gear is set to be larger than the axial width of the first speed change gear; and
the connecting member is kept to the connected condition by moving the connecting member from the axial position where the fork shaft moves the connecting member to the second shift position to the other side in the axial direction, thereby to move the detent member to the detent position by the cam member.

4. The transmission according to any one of claims 1 through 3, wherein,
the rotation shaft supports the output side speed change gear and includes a plurality of output shafts, having different axial lengths and the parking gear may be fixed to a shorter axial length output shaft among the plurality of output shafts

5. The transmission according to any one of claims 1 through 4, wherein,
the rotation shaft supporting a plurality of speed change gears includes
mutually co-centrically arranged first input shaft and second input shaft for supporting the input side speed change gears of the plurality of speed change gears and a first and a second output shaft arranged in parallel with the first and the second input shafts respectively and supporting the output side speed change gears of the plurality of speed change gear, and wherein
the transmission further includes a dual clutch having a first clutch for transmitting a rotation driving force of a prime mover to the first input shaft and a second clutch for transmitting the rotation driving force to the second input shaft wherein the parking gear is fixed to any one of the first and the second output shafts.
